# EUROPEAN PATENT SPECIFICATION

(11) **EP 2 470 025 B1**
(45) Date of publication and mention of the grant of the patent: **27.12.2017**
(21) Application number: 10757298.4
(22) Date of filing: 27.08.2010
(51) Int. Cl.: A21D 2/00, A21D 10/00, A23P 10/20, A23P 20/12, A23L 7/117

(54) **ACTIVE INGREDIENT DELIVERY SYSTEM**
WIRKSTOFFABGABESYSTEM
SYSTÈME DE DÉLIVRANCE D'INGRÉDIENT ACTIF

(30) Priority: 27.08.2009 EP 09168802
(43) Date of publication of application: 04.07.2012
(73) Proprietor: Nederlandse Organisatie voor toegepast- natuurwetenschappelijk onderzoek TNO, 2595 DA 's-Gravenhage (NL)
(72) Inventor: NOORT, Martijn Willem-Jan, NL-1221 BW Hilversum (NL)
(74) Representative: V.O.
(86) International application number: PCT/NL2010/050539
(87) International publication number: WO 2011/025377

(56) References cited:
- GB-A- 680 447
- GB-A- 1 537 193
- US-A- 4 963 373
- US-A- 5 279 658
- US-A- 5 942 273
- US-A1- 2009 155 408
- US-B1- 6 312 741

## Description

The invention is directed to a method for preparing a dough product and to a flour pellet.

When preparing food, ingredients often need to be provided to the raw food mixture at different stages during the preparation process. Often, this may be a matter of simply adding an ingredient directly to the raw ingredient mixture at a certain stage in the preparation process. However, in some processes it may not be that easy, or even possible, to add ingredients at a certain stage. For example, in case the process comprises a heat treatment, such as baking, the addition of ingredients to the inside of the heat treated (*e.g*. baked) product may become a complicated procedure.

The reasons that certain ingredients are preferably added in a preparation process of dough products after a possible heat treatment may vary. For example, certain ingredients may be susceptible for degradation at elevated temperatures. Other ingredients may be volatile and may easily evaporate from the product at elevated temperatures. Delivery systems may provide increased control during the preparation process of foods over such ingredients. A delivery system comprising a certain ingredient may for example protect that ingredient from certain conditions or regulate the release of the ingredient into the food mixture.

Ingredient delivery systems are known in the food industry, in particular in the form of encapsulated particles.

US-A-6,312,741 describes an encapsulated particulate comprising fumaric acid. When provided in bread dough, the particle provides the dough with an acid environment conducive to preserving antimicrobial ingredients after baking without deleteriously affecting the bread dough prior to baking.

WO-A-00/74499 describes a substrate encapsulated with a low melt vegetable oil for use in food systems, for example in the manufacture of meat products.

US-A-5,690,990 describes a process for encapsulating flavour oils oleoresin and spice in a colloid gel, which colloid gel can be incorporated in a food system.

A disadvantage of using encapsulated ingredients to deliver those ingredients in a food production process is that the obtained food product may comprise undesirable additives, *viz*. the residues of the melted coating material. Such additives are typically fats, which may be undesirable from a health point of view. Furthermore, providing encapsulated ingredients may be a complicated and expensive process.

Further, methods for preparing pellets are known in the art.

GB 680,447 describes a process for the preparation of a dehydrated dough product comprising dividing dough into relatively uniform pellets and thereafter drying said pellets. When preparing a dough, the pellets are first grinded before including them in the dough.

US 5,942,273 describes a method of preparing pellets for a snack confectionary and a method for preparing expanded snack confectionary using these pellets.

US 5,279,658 is directed to a composition suitable for forming into shaped articles, which composition comprises flour. The article may be used for packaging foodstuffs.

GB 1,537,193 describes a method of treating flour or grain comprising compacting the flour or grain and milling the compacted material.

US 2009/0155408 describes a substitute for common salt, comprising at least one yeast extract, flour of aromatic nature and a low-sodium salt. The salt substitute may be used in breadmaking.

US 4,963,373 describes a method for preparing a cooked cereal composition, wherein the method may comprise the substep of forming the cooked cereal dough into pellets, flaking the pellets into flakes, and toasting the flakes to form dried, toasted ready-to-eat cereal flakes.

Object of the invention is to solve at least in part the above-mentioned problems encountered in the prior art.

A further object of the invention is to provide an ingredient delivery system that is particularly suitable for use in flour based dough, in particular during the baking process of such dough.

A further object of the invention is to provide an inexpensive ingredient delivery system that does not alter the production process of the food, in particular in a baking process.

A further object of the invention is to provide a dough product having an increased taste intensity regarding a specific ingredient.

A further object of the invention is to provide a dough product having an improved flavor regarding a certain ingredient.

At least one of said objects is met by providing a method for preparing a dough product, comprising subjecting a dough to a heat treatment, wherein the dough has been prepared by mixing (i) water, (ii) non-pelletized flour and (iii) one or more pellets comprising 40-99 wt.% pelletized flour, 1-60 wt.% active ingredient, 0-5 wt.% yeast extract and 0-10 wt.% other ingredients, wherein the active ingredient is a flavour compound, which flavour compound is a salt.

The inventors have realized that a pellet comprising flour and an active ingredient may be suitably used as an ingredient delivery system in a preparation process of a dough product. The pellet may successfully protect the active ingredient from degradation or undesirable contact with compounds present in the dough and/or prevent or at least reduce evaporation of the active ingredient from the pellet during a heat treatment.

The pellet used in the method of the invention, i.e. the pellet comprising flour and an active ingredient, is thought to hydrate gradually during one or more of the preparation steps, which steps include mixing the dough, a possible dough fermentation step and the heat treatment (*e.g*. baking), and/or during storage of the dough product. During or after hydration of the pellet, the active ingredient is released gradually (slowly) in the dough during heat treatment (*e.g*. baking). Prior to hydration, the active ingredient is less susceptible to potentially detrimental conditions in the dough, such as elevated temperature, oxidation and acidity, compared to when the ingredient would have been directly added to the dough. As long as the pellet is at least partially intact, the active ingredient generally is also less accessible by other compounds in the dough and undesirable reactions may thus be prevented.

An advantage of the method of the invention is that the pellets can simply be added as an ingredient to the raw ingredient mixture for the dough product (*e.g.* the dough), without the need of complicated changes to the production process of the dough product. A further advantage of the present invention is the low cost of the delivery system, *viz.* the pellet, compared to other delivery systems, such as the encapsulated ingredients of the prior art. The pelletizing process involves considerably less costs than *e.g*. encapsulation.

Further, the present invention is advantageous, at least in some embodiments in that the preparation method of the invention provides the final dough product with increased taste regarding the active ingredient. A consumer who tastes the dough product obtained by the method of the invention may perceive an increased taste intensity of the active ingredient, as if the active ingredient was present in the dough product in a higher concentration than it actually is. This may be very desirable for lowering the amounts of unhealthy ingredients, such as salt or sugar, or expensive ingredients, in dough products without the consumer noticing a change in taste. Without wishing to be bound by any theory, it is expected that the intense taste of the active ingredient is due to the inhomogeneous distribution of the active ingredient over the dough product. This theory is further explained hereinbelow.

A further advantage of the present invention is that the dough product may have an improved flavour regarding the active ingredient. This is expected to be due to the active ingredient being able to better retain its natural taste quality during the preparation process when it is provided in the food by means of a pellet.

The term "or" as used herein is defined as "and/or" unless specified otherwise.

The term "a" or "an" as used herein is defined as "at least one" unless specified otherwise.

When referring to a noun (*e.g.* a compound, an additive, *etc*.) in the singular, the plural is meant to be included. Thus, when referring to a specific moiety, *e.g.* "compound", this means "at least one" of that moiety, *e.g.* "at least one compound", unless specified otherwise.

The term "pellet" or "flour pellet" as used herein refers to a pellet obtained by a pelletizing process, *e.g.* as described hereinbelow.

The term "non-pelletized flour" as used herein refers to flour that is not pelletized. Typically, non-pelletized flour is a powder.

The term "active ingredient" refers to an ingredient other than flour that is released to the dough from the pellet, in particular upon disintegration of the pellet. Disintegration of the pellet may start as early as contacting the pellet with water, *e.g.* during the mixing of the dough. The pellet may disintegrate gradually during the entire preparation process and even after the preparation process, *e.g.* during storage of the dough product.

A dough product is a product that at least in part consists of heat-treated dough. A dough product according to the invention may in particular be selected from the group of bakery products, such as bread, gluten-free bread, raisin bread, croissants, pastries (*e.g*. cake and doughnuts), pancakes and tortillas; cereal products, such as breakfast cereals, cornflakes and granola bars; and baked and/or fried batters A batter is a dough having a dry matter content of 50 wt.% or less.

When referring to dough products obtainable by the method of the invention, such dough products both include dough products that are ready for human consumption and dough products that still have to be subjected to a further heat treatment before consumption. Such a further heat treatment is usually conducted by the consumer. Such a heat treatment may for example be finishing off the dough product by baking it in the oven. Examples of dough products thus include part-baked bread, easy-bake rolls and unbaked (often pre-shaped) croissants dough.

The dough obtained in the method of the invention comprises a dough matrix and one or more pellets, wherein the one or more pellets are distributed throughout the dough matrix. The dough matrix comprises water, flour and optionally other ingredients that are typically used in dough, such as for example one or more components selected from the group of yeast, salt, sugar, gluten and eggs. Water in the dough matrix may be provided by one or more water containing ingredients, such as for example tap water, saline solutions, milk or beer.

The dough matrix may be prepared in a manner known *per se* for preparing doughs for a specific type of product, *e.g.* for preparing a bread. As a rule of thumb the weight to weight ratio flour to water (flour:water) is in the range of 25:1 to 1:10. For bread this ratio is preferably from 10:5 - 10:9, for example a flour:water weight ratio of about 10:6. For cookies this ratio is preferably from 25:1 to 15:1, for example a flour:water weight ratio of about 20:1. For batters this ratio is preferably from 1:1 to 1:15, such as 1:5 to 1:15, for example a flour:water weight ratio of about 1:9.

The preparation of the dough and/or the heat treatment may be based on methodology known in the art to make a specific dough and a specific prepared dough product. The preparation of the dough may comprise processing steps such as for example fermentation, leavening and/or shaping of the dough.

The mixing of the dough ingredients can, *e.g.,* be done by any means known in the art, *e.g.* by a straight dough method, as is often applied in Europe or a sponge and dough method, as is commonly applied in the USA, or a sourdough method. In the sponge and dough method, a first part of the ingredients is mixed to form a first dough, which is known as the sponge and thereafter the rest of the ingredients are added to the sponge and mixed to form the final dough that is to be baked.

The flour may in principle be any flour, meal, whole meal or a fraction thereof, including cereal flours, pseudocereal flour, the flour of tubers, the flour of roots and the flour of pulses. Cereal flour usually refers to a refined product, which comprises endosperm without bran. Meal and whole meal usually refers to the presence of both endosperm and bran fractions. In particular the flour may be selected from the group of wheat flour, rye flour, corn flour, oat flour, rice flour, buckwheat flour, tapioca flour, potato flour, atta flour, soy bean flour and mixtures thereof. Buckwheat flour may be particular desirable when preparing dough products that can be part of a gluten-free diet. An example of a fraction of flour, meal or whole meal is starch. For example, a batter may be prepared using only the starch fraction of a flour, meal or whole meal. Starch may be derived from any of the flour types mentioned above. Starch may be used in its native form (native starch), in gelatinized form (gelatinized starch) and in modified form (chemically and/or physically modified starch).

The pellet(s) may be added after the dough has been prepared or during the preparation thereof. If the dough is a leavened dough, the pellet(s) may be added before, during or after leavening. In various cases, addition of the pellets prior to leavening may be preferred, because of the ease with which this can be done without complicating the preparation process. However, in a specific embodiment, dough is prepared by adding large amounts of flour after prefermentation. In such a case, the pellets are also preferably added after prefermentation, because this may shorten the time for hydration of the pellets. This may for example be the case for sponge or sourdough. Sponge (or bread starter) is a mixture of flour, water, and a leavening agent (which may be a chemical leavening agent (such as baking powder) or a microbiological leavening agent (such as yeast)) that is added to bread dough before the kneading and baking process as a substitute for yeast. Sourdough is a dough containing a lactobacillus culture, usually in symbiotic combination with yeast.

The weight to weight ratio pellets to non-pelletized flour in the dough generally is in the range of 1:5 to 1:25, for example about 1:9.

The active ingredient is a flavour compounds.

The term "flavour compound" as used herein refers to a compound which primary function in food is the flavour, *e.g.* a certain odour or taste, it imparts to the food rather than a nutritional function. The flavour compound is a salt, such as sodium chloride, potassium chloride, natural sea salt, magnesium chloride, ammonium chloride, calcium chloride and any other salt consisting of food grade ions, *i.e.* any other salt that consists of ions suitable for human consumption

The pellets may further comprise one or more antioxidants. This is in particular advantageous when the active ingredient is an oxidation-sensitive compound. By providing the antioxidant in the pellet with the oxidation-sensitive compound, the antioxidant may function very efficient for preventing the oxidation of the active ingredient. This may reduce the amount of antioxidant normally needed when the antioxidant would be homogeneously distributed over the dough. Thus, the efficiency of the antioxidant may be improved.

The heat treatment according to the method of the invention may be any heat treatment and includes baking, heating with (super-heated) steam, microwave, InfraRed, grilling/roasting, puffing and frying. The heating temperature and duration may be based on methodology generally known in the art for the preparation of a specific dough product.

During the heat-treatment, the pellet will be subject to hydratation, during which the active ingredient(s) become part of the dough. Around the hydrated pellets (or around the position where the pellets used to be before having disintegrated as a result of hydratation) areas are formed comprising the active ingredient as determined by the composition of the pellet. Upon completion of the heat treatment, the pellet is preferably fully hydrated and disintegrated, resulting in a dough product having a single structure, i.e. no difference in structure can be distinguished between the part of the dough product originating from the former pellets and the part of the dough product originating from the former dough matrix.

In particular preferred is a method wherein the heat treatment comprises baking. Usually, the dough in a baking process is subjected to a constant heat for a time frame of several minutes up to a few hours. Such a heat treatment is considered to be very efficient for the full hydration and disintegration of the pellet in the dough and thus into the final baked product structure, such that the pellets are not distinguishable visually or by texture analysis from the other ingredients in the final baked product.

Pelletization is a process frequently used for preparing animal food. It is a process wherein a compound composition, typically a powdery composition, is compressed, moulded or otherwise formed into the shape of a pellet. Pelletizing may be done by extrusion, pressing pills or any other pelletizing technique known in the art. For example, pellets may be obtained by agglomeration of solid particles.

Agglomeration is the process of taking smaller particles and processing them so that together they form larger particles. The larger particles obtained by agglomeration are referred to herein as agglomerated pellets. Agglomerated pellets may be prepared by methods known in the art *per se.* For example, agglomeration processes used for couscous preparation may also be suitably applied for the agglomerated pellets of the invention. A suitable agglomeration processes is for example the Buhler agglomeration process, which is described in WO 2004/032650. In this process, the semolina and flour composition should be replaced by the pellet composition of the invention and the cooking step may be left out, in order to obtain suitable flour pellets of the invention.

Agglomerated pellets typically have a smaller size than pellets obtained in the pelletization process described above. For example, the size diameter of the smallest circumscribed ball of an agglomerated pellet may be 0.1 - 6 mm, preferably 2 - 4 mm.

The hardness of the pellet depends *i.a*. on the processing temperature, the shape of the mould and the addition of steam to the pellet composition during the process. On the one hand, hard pellets are desirable, because they are more durable than soft pellets and more suitable for transport than soft pellets. However, regarding hydration properties, soft pellets may be more desirable. By adjusting, for instance, the size, shape, and hardness of the pellet, a desirable hydratation rate of the pellet may be obtained. Thus, the invention provides for tailor made delivery systems that can be optimized depending on the specific type of active ingredient, the dough product and the preparation method, such as water content of the dough, length of the process, *etc.*

The pelletization process may be a mild pelletization process, which means that the pelletization is conducted at relatively low temperatures, preferably at temperatures below 60 °C, more preferably at a temperature of 25 - 45 °C. A reason for this low temperature is that at temperatures above 60 °C protein in the flour (such as gluten in case of wheat flour) may denaturize. In this way, after the (partial) disintegration of the pellets, the remnants of the pellet can still form a normal dough structure. The pelletization process may further comprise one or more drying and/or cooling steps. This may increase the control over the desirable water content in the pellet composition.

Preferably, the composition of the obtained pellet is the same as the composition of the dough matrix, except that a certain amount of flour is substituted with the active ingredient and except for the water content, which is substantially lower in the pellet composition. The pellet composition may be obtained by taking the dough matrix composition excluding water and substituting 1-60 wt.%, preferably 1-40 wt.%, for example 1-25 wt.%, 2-20 wt.%, or 5-15 wt.% of the flour in the dry dough matrix composition with the active ingredient.

A pellet of the invention has the following composition:
- 40-99 wt.% flour, for example 60-99 wt.% or 75-95% flour, preferably 50-75 wt.% flour; and
- 1-60 wt.%, for example 1-25 wt.%, 1-20 wt.% or 2-15 wt.% active ingredient, preferably 25-50 wt.% active ingredient; and
- 0-5% wt.% yeast extract; and
- 0-10% other ingredients, such as emulsifiers;
wherein the weight percentages are based on the dry weight of the pellet. For example, a pellet according to the invention for the preparation of bread may have the following composition, based on the dry weight of the pellet: 85% wheat flour, 10% sodium chloride, 2% yeast extract and 3% other ingredients such as emulsifiers.

The pellet may further comprise an oil and/or a fat. It is expected that the presence of oil and/or fat in the composition from which the pellets are formed may reduce the friction encountered in certain pellet formation techniques, such as pressing pellets using a mould. The fat or oil can be any fat or oil that can be used in food products. The fat or oil may for example be selected from the group consisting of vegetable fats and oils, such as soybean oil and palm oil and edible animal fats. The fat and/or oil may be present in the pellet in an amount of 0.5-20 wt.%, such as 1-10 wt.% or 2-5 wt%, based on the total dry weight of the pellet. The addition of fat and/or oil may further have a desirable effect on the hydration and/or hardness properties of the pellets of the invention.

The pellet may comprise water. Flour is a powder composition that may comprise small amounts of water. Flour typically has a moisture content of 12-14 wt.%. Due to microbial stability, the moisture content of flour should preferably be kept at 15 wt.% or less. Consequently, the pellet preferably has a water content of 15 wt.% or less. In an embodiment, the pellet may have essentially the same water content as the flour used in the dough matrix.

In an embodiment, the flour in the pellet is a different type of flour than the flour in the dough matrix.

The density of the pellets may be 0.1 - 2.2 g/cm³. The pellets may be compact (low porosity) or porous. In case of a porous pellet, the density of the pellet is typically 0.1 - 0.8 g/cm³. In case of a compact pellet, the density of the pellet is typically 0.8 - 2.2 g/cm³.

The shape of the pellet may be any suitable shape, including spherical, rod-shaped, cylindrical, cubical, cuboid. The diameter of the smallest circumscribed ball of the pellet may be 0.1-25 mm, for example 1-25 or 3-20 mm. Preferably, the diameter of the smallest circumscribed ball is 1-8 mm, more preferably 2-4 mm.

Preferably, the pellet has an at least substantially cylindrical shape, as is common for extrudates. The term cylindrical is used herein in the broad sense and thus includes cylinders having a cylindrical cross section, cylinders having an ellipsoid cross section and cylinders having a polygonal cross section. For example, a pellet may be a cylinder having a length of 5-25 mm and a diameter of 1-10 mm.

The surface of the pellets may be hydrophobic, for example by providing the pellet with a hydrophobic coating. This may slow down hydration of the pellet, in particular during the heat-treatment. This may be desirable when hydration of the pellet should occur late in the heat-treatment, for example when the active ingredient is heat-sensitive. Examples of hydrophobic coatings are vegetable oils or fats, other lipids and waxes, emulsifiers (such as mono- diglycerides), proteins (such as prolamins or gluten), magnesium stearate, etc.

Typically, the weight percentage of the active ingredient in the pellets is different from, and typically higher than, that in the dough matrix. Consequently, the active ingredient in the obtained dough product has an inhomogeneous distribution over the dough product.

The dough product may comprise a dough product matrix and one or more active regions. Active regions are parts of the dough product wherein the concentration of the active ingredient in each active region is typically higher than the concentration of the active ingredient in the dough product matrix. The ingredients in the dough product matrix may originate from the dough matrix, while the active regions may originate from the pellets according to the method of the invention. The active regions may also be called 3D spots, underlining the three-dimensional nature of these areas.

The shape of the active regions is partially dependent on the shape of the pellets. In the 3D spots a concentration gradient from a high concentration in the centre of the spot (where the pellet used to be) to a lower concentration when extending radially from the centre. The gradient may extend into the dough matrix because of migration and diffusion processes during the disintegration of the pellet during the preparation process.

Each active region may have a volume of 1-2000 mm³, preferably 1-500 mm³, more preferably 5-250 mm³, more preferably 20-200 mm³. The active regions are preferably homogeneously distributed over the dough product matrix.

The active region comprises flour components. Typically, the flour content is about equal in the active regions and the dough product matrix, e.g. the flour weight percentage in each active region is 0.8 - 1.2 of the flour weight percentage in the dough product matrix. Furthermore, the active region and the dough product matrix preferably have about the same density, e.g. the first area has a density 0.8 - 1.2, preferably 0.9-1.1 times that of the second area.

The active regions and the dough product matrix preferably have essentially the same texture in the dough product and are not distinguishable visually or sensory, or at least not in a disturbing manner, from the other ingredients in the final baked product by the consumer. If differences in texture may be present, these may be measured by technical methods known in the art, such as texture analysis.

The dough product may further comprise one or more texture ingredients. The term "texture ingredient" as used herein refers to ingredients that provide the dough product with extra texture that is deviant from the dough product matrix and the active regions. Texture ingredients may be added for their texture, for their taste and/or for a more appealing look of the dough product. Examples of texture ingredients are: fruit, such as raisins, candied fruit (e.g. bigarreau) or apple pieces; vegetables, such as onion; nuts, such as walnuts; seeds, such as poppy seeds; and pastes, such as almond paste. Such particles are usually not considered to be part of the dough matrix or the active regions.

A consumer who tastes the dough product obtained by the method of the invention may experience a very intense taste of the active ingredient - in particular in the case the active ingredient is a flavour compound - as if the active ingredient was present in the dough product in a higher concentration than it actually is. Without wishing to be bound by any theory, it is expected that this more intense taste of the active ingredient is due to the inhomogeneous distribution of the active ingredient over the dough product. This theory is based on the general idea that a sensation is perceived stronger when a sensory contrast is created. When a dough product obtained by the method of the invention is tasted by a consumer, he will typically experience both the taste of the active regions as well as the taste of the dough product matrix. Such a consumer may not consciously notice these different areas. Instead, he will experience the taste of the dough product as a whole. However, because of the contrast in concentration of the active ingredient between the active regions and the dough product matrix, the body perceives the taste of the active ingredient as being very strong. Thus, the so-called sensory contrast in the dough product may lead to an extra intense taste of the active ingredient. The consumer will perceive this intense taste as being due to a high concentration of the active ingredient, while in fact the intense taste is caused by the sensory contrast.

A dough product obtained by the method of the invention may thus comprise a lower concentration of an active ingredient than would be usual for such a product without the consumer noticing a difference in taste. This may be very desirable in certain cases, for example to reduce the content of unhealthy flavour compounds in dough products. Examples of such unhealthy flavour compounds are salts such as sodium chloride, sugars and sweeteners. Furthermore, the invention may be used to reduce expensive flavour compounds.

The concentration of the active ingredient in the dough product may be mainly determined by the concentration of the active ingredient in the pellet. In one embodiment, the dough matrix comprises substantially no active ingredient.

A good example wherein the present invention may be used is in the product of bread. Bread is an important part of many people's diet. Bread is high in carbohydrates and fibre, low in fat and a good source of energy. Unfortunately, most manufactured bread contains large amounts of sodium chloride, which may have the undesirable effect of raising the consumer's blood pressure. The present invention provides for a method to prepare bread with a lower concentration of salt compared to manufactured bread of the prior art, but has an equally strong salty taste. Moreover, the sodium reduction can be improved further by formulating alternative ions, taste enhancers, taste potentiators, flavours and/or aromas in the pellet together with the sodium chloride. Thus, bread according to the invention tastes the same, but may be considered healthier than a comparable prior art bread.

Although the concentration of the active ingredient is usually higher in the pellets than in the dough matrix, this does not necessarily have to be the case. For example, in an embodiment, a dry dough mixture is prepared first, after which part of this mixture is pelletized while water is added to the remainder of the mixture, thus forming a dough. The pellets may then later be added to the dough. Such a method is in particular suitable when using cheap heat-sensitive active ingredients.

The invention will be illustrated in the examples below.

### Example 1: Manual preparation of flour pellets comprising salt

### Material

Commercial bread flour (Edelweiss, Meneba, The Netherlands), salt (suprasel fine iodinized salt, Akzo, The Netherlands) and tapwater were used.

### Method

100 g flour and 100 g salt were mixed dry in a mixer (N50, Hobart, Canada) equipped with a beater. 60 g of water was added by spraying it manually while mixing, to ensure even hydration of the mixture. In this way a loose dough was obtained.

The dough was sheeted into a dough layer of about 2 or about 4 mm and placed on top of a metal wire sieve with 2 or 4 mm openings respectively. Using a rubber rolling pin the dough was pressed through the screen. The resulting dough particles were collected and dried at 40°C-40%RH until the added water was evaporated.

### Results

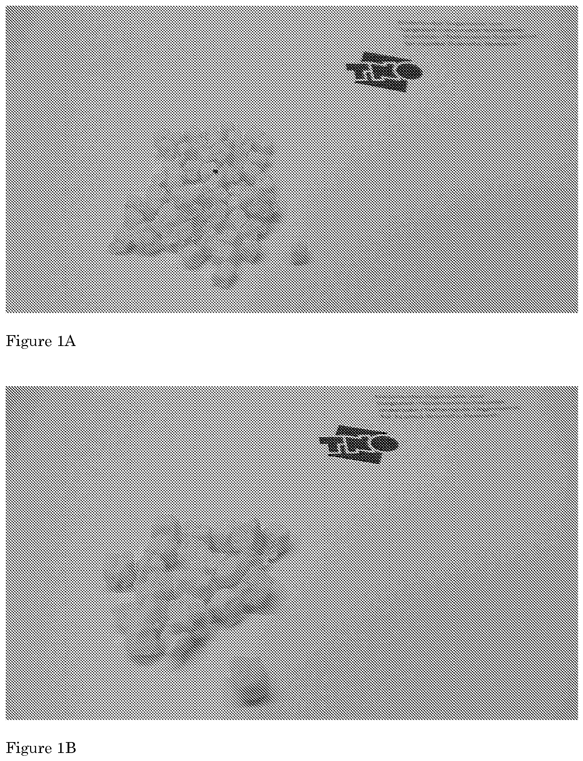

Flour-salt pellets with a diameter of about 2 and about 4 mm respectively were obtained, as shown in Figures 1A and 1B.

### Example 2: Preparation of flour pellets comprising salt using a pelleting press

### Materials

Commercial bread flour (Edelweiss, Meneba, The Netherlands), whole meal flour (Meneba, The Netherlands), salt (suprasel fine iodinized salt, Akzo, The Netherlands) and fat (spray dried, de Kievit, The Netherlands). Various mixtures were made as indicated in table 1. All dry components were mixed in a spiral mixer (SP 150, Kemper, Germany).

**Table 1: Formulation test mixtures (parts by weight)**

| | A | B | C | D | E |
|---|---|---|---|---|---|
| Flour | 100 | | 100 | 75 | 50 |
| Whole meal flour | | 100 | | | |
| Salt | | | 2 | 25 | 50 |
| fat | | | 2 | | |

### Methods

Pellets were produced in a pilot plant pelleting press (type "Heesen monoroll") equipped with a horizontally rotating mould/die and 1 roller. The press was fed by a mixer which optionally conditioned the powder mixture with steam to reach the desired moisture content and temperature for pelleting. The mixer fed the press in which the eccentric rotating roller pressed the powder mixture through the rotating mould (die) with variable holes (dies of 2.3-6 mm were tested) and channel lengths (30-50 mm were tested). In the die the powder is compressed into pellets which are cut-off to the desired length. The pellets were collected and dried to reach the original water content of the dry powders (14 wt% water in the flour).

### Results

### Pellets of formulation A:

Using a die of 3 mm diameter and 30 mm channel length, pellets were obtained when steam was added to reach a powder temperature of about 30°C or higher. In this test cylindrical pellets of 3 mm diameter were obtained, which were about 44°C after pressing. They were cooled and dried before packaging.

### Pellets of formulation B:

Using a die of 3 mm diameter and 30 mm channel length, pellets were obtained under addition of steam, thereby reaching a powder temperature of about 20°C or higher. In this test cylindrical pellets of 3 mm diameter were obtained, which were about 45°C after pressing. They were cooled and dried before packaging.

### Pellets of formulation C:

Using a die of 3 mm diameter and 30 mm channel length, pellets were obtained under addition of steam, thereby reaching a powder temperature of about 25°C or higher. In this test cylindrical pellets of 3 mm diameter were obtained, which were about 49°C after pressing. They were cooled and dried before packaging.

### Pellets of formulation D:

Using a die of 6 mm diameter and 40 mm channel length, pellets were obtained under addition of steam. In this test, a knife was used to cut-off the pellets from the die. The knife was placed as close as possible to the die. In this way cylindrical pellets variable length were obtained:

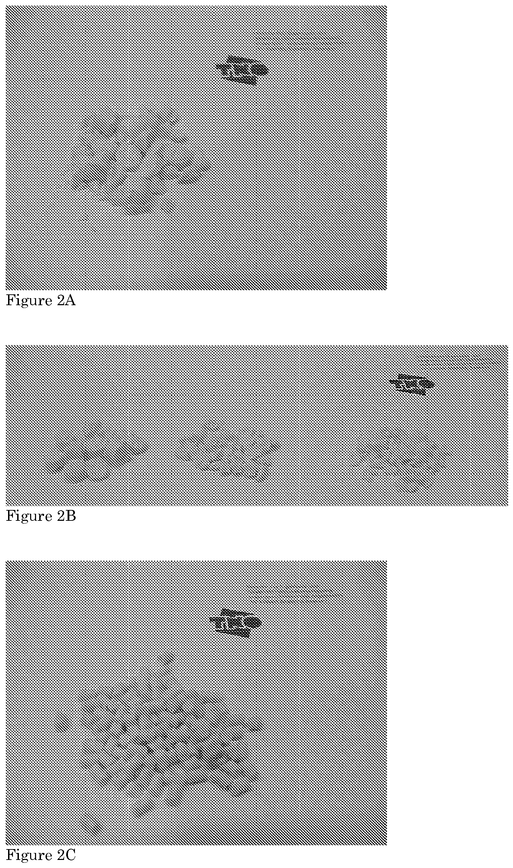

By sieving the pellets, smaller pellets of different sizes could be obtained; e.g. pellets larger than 4000 µm (see Figure 2B, left picture), between 4000-2800 µm (see Figure 2B, picture in the middle) and between 2800-1180 µm (see Figure 2B, right picture).

### Pellets of formulation E:

Using a die of 2.3 mm diameter and 35 mm channel length, pellets were obtained without steam added. In this test cylindrical pellets of 2.3 mm diameter and 15 mm length were obtained, as shown in figure 2C.

All pellets obtained in this Example were considered to be suitable for use in preparing dough products according to the invention.

### Example 3: Preparation of bread using flour pellets

### Materials

Commercial bread flour (Edelweiss, Meneba, The Netherlands) was used for bread making. This flour has a protein content of 12.5%dm, an ash content of 0.58%dm and a water absorption of 57.5%. Instant yeast (Fermipan red, DSM, The Netherlands), salt (suprasel fine iodinized salt, Akzo, The Netherlands) and bread improver (Prestant Wit, Zeelandia, The Netherlands) were used without further purification.

Flour-salt pellets (50%ww flour, 50%ww salt, of 4 mm diameter, prepared manually) were used as obtained in Example 1.

### Method

A bread recipe was used, composed of 3000 g flour, 1725 g tap water, 30 g salt (1% on flour), 50 g yeast and 90 g bread improver. In case flour salt pellets were used, the same recipe was used, but 30 g salt and 30 g of flour were replaced by 60 g flour-salt particles. Dough was mixed using a spiral mixer (SP15, Kemper, Germany) for 1 minute at low speed and about 6 minutes at high speed. Mixing was stopped when a dough temperature of 26°C was reached.

Dough pieces of 906 g were rounded by hand before proofing it for 30 min at 30°C, moulded using a bread moulder (Mono, UK) and placed in closed baking tins. The final proofing time was 50-55 min (corrected to reach 600 mL gas production in the fermentograph) and the breads were baked for 30 min at 240°C in a vertical revolving oven. After baking, the breads were cooled for 1 h at 28°C before slicing and packaging in polyethylene (PE) bags.

Bread volume of three breads was measured after 1 hour cooling and before slicing by rape seed displacement method, and the mean volume was calculated (mL/loaf).

### Results

The dough mixing properties were not substantially altered by introduction of the pellets. The energy absorption was similar (reference 29 kJ/kg and with pellets 30 kJ/kg). Also the dough behaviour was judged to be similar by the test baker. The bread volume and baking properties of bread with pellets was slightly lower. The bread volume of the reference was 4225 mL and with introduction of pellets 4142 mL. This volume reduction of 2% was considered to be acceptably small.

The taste of the breads was judged by 3 experienced tasters. They found the reference bread with 1% salt to have a bland taste, with low saltiness. The bread with the flour-salt pellets with the same overall salt content in the bread, had much more taste, and the saltiness was clearly more intense.

### Conclusion

Bread products can be made with introduction of pellets, using conventional bread baking equipment and methods. The introduction of the pellets caused only limited reduction of the baking quality, but was able to create spots of high constituent concentration. By this way the taste intensity of the constituent could be enhanced.

### Example 4: Active ingredient distribution in dough products:

### Method

Flour:salt pellets (50:50) were prepared in a similar way as described in Example 1, but with E124 (Ponceau 4R) as an additional ingredient. E124 is a water soluble, red food colourant. E124 was added to the flour-salt-water mixture before making the pellets. Thus, pellets of 2 and 4 mm were prepared and. Subsequently, bread products were prepared according to the method described in example 2 with the pellets comprising red food colourant.

### Results

Visual inspection of the bread products after baking and cooling showed that pink spots were clearly visible in the bread crumb. These pink spots were the remnants of the pellets. The pellets were incorporated in the bread structure and remained as salty (very salty by taste) spots. In case of the 2 mm pellets, the whole bread was slightly pink and the pink spots were small and bleeded slightly, indicating that the pellets were hydrated and slightly fallen apart. In case of the large pellets the pink colour was mainly remained in the concentrated spots. Although the spots were hydrated the pellet remained intact.

### Conclusion

This experiment clearly shows that an inhomogeneous distribution of (water soluble) active ingredients (*viz*. the food colourant) can be created in baked dough products by incorporating these ingredients in flour pellets. The experiment shows that the pellets result in areas with a high concentration of active ingredient in the baked product. In case smaller pellets are used, the pellet will hydrate more and fall apart more easily compared to large pellets. When a pellet hydrates and/or falls apart, the active ingredient may spread over the dough product, thus resulting in a more homogeneously distributed concentration of the active ingredient over the dough product.

Thus, the degree of inhomogeneity of the active ingredient in the dough product can be controlled by varying the pellet size. The distribution of the active ingredient over the dough product can be made more inhomogeneous (*viz.* result in areas with a higher concentration of active ingredient) by increasing the size of the flour pellet used for preparation. Such control is desirable, because different applications (different dough product, different active ingredient), may require different degrees of inhomogeneity.

### Example 5: Preparation of a batter using flour pellets

Mix a batter of 150 grams of wheat flour, 150 grams of corn starch, 6 grams salt, 1.2 grams Sodium bicarbonate, 1.5 grams of Sodium Acid Pyro Phosphate (SAPP 28) and 285 ml water of room temperature using a Hobart mixer (N50, Hobart, Canada) equipped with a beater at stage 1 for 3 minutes. Check if the batter is homogeneous. Let the batter rest for one hour before use. The composition of the batter is shown in Table 2.

A second batter is prepared according to the same recipe, but wherein the salt is left out and pellets obtained by Example 1 or 2 are added to the batter at the end of mixing, or at a given time during the resting period, or at the end of the resting period just before applying the batter to the core/substrate.

| **INGREDIENTS** | reference | With pellets |
|---|---|---|
| | gram | gram |
| Flour | 150.0 | 144.0 |
| Corn starch | 150.0 | 150.0 |
| NaCl | 6.0 | 0 |
| Sodium Bicarbonate | 1.2 | 1.2 |
| SAPP 28 | 1.5 | 1.5 |
| water | 285.0 | 285.0 |
| Salt-flour pellets 50:50 of 2 mm diameter | 0 | 12 |

### Example 6: Preparation of battered snacks

The batters obtained in Example 5 is used to coat different substrates like mash potato, chicken meat, union rings, shrimps, etc.

The coated substrate is than deep fried in oil and/or baked in hot air until the desired core temperature is reached and the coating has the desired colour and crispness.

### Example 7: Preparation of agglomerated flour pellets

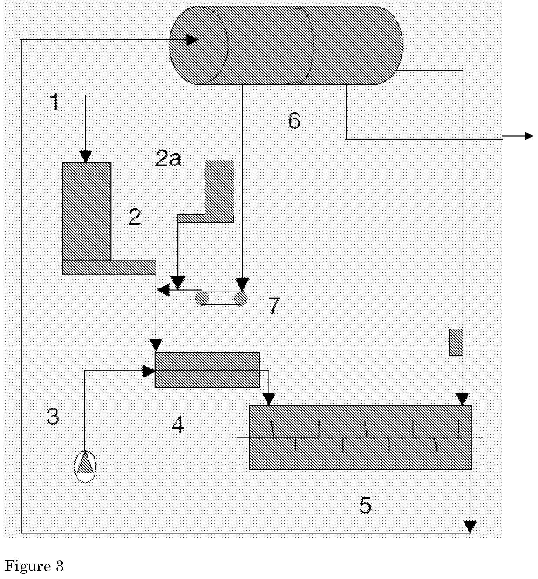

Agglomerated flour pellets are prepared from a composition 80 wt.% flour and 20 wt.% salt using a set-up as shown in Figure 3.

First, the flour/salt composition (1) is fed with a material feed system (2) to a high-speed mixer (4). Water is dosed into the flour/salt mixture during mixing using a water metering system (3). The mixing in mixer (4) is conducted with sufficiently fast mixing movements for an at least partial liquidisation of the salt/flour mixture, in order to evenly wet the salt and flour particles of the salt/flour mixture. The thus obtained wetted mixture is then mixed again with less rapid mixing movements with a mixer (5), avoiding the liquidisation of the salt/flour mixture, in order to create an agglomeration of salt/flour pellets. The mixed composition is then fed to a drum screen (6). The drum sieve separates any unsuitable granules that may be present. Excessively fine granules are returned to the mixer. Excessively coarse granules are fed to a shredder, where they are reduced and returned to the sieve. The moistening, screening and mixing operations take no longer than 15 minutes.

The thus obtained agglomerated pellets are then dried at a temperature of 40°C.

The experiment is repeated, but instead of drying the pellets at a temperature of 40°C, the pellets are dried at high temperature of 80 °C.
The experiment is repeated, but the pellets are subjected to a steam-conditioning step prior to drying.

The experiment is repeated, but instead of a drying step, the pellets are subjected to a steam-conditioning step.

## Claims

1. Method for preparing a dough product, comprising subjecting a dough to a heat-treatment, wherein the dough has been prepared by mixing water, non-pelletized flour and one or more pellets comprising 40-99 wt.% pelletized flour, 1-60 wt.% active ingredient, 0-5 wt.% yeast extract and 0-10 wt.% other ingredients, wherein the active ingredient is a flavour compound, which flavour compound is a salt.

2. Method according to claim 1, wherein the heat-treatment comprises baking.

3. Method according to any of the previous claims, wherein the one or more pellets have been pelletized in a process comprising the steps of:
- pelletization of a mixture of flour and the active ingredient at a temperature below 60 °C; and
- optionally one or more drying and/or cooling steps.

4. Method according to any of the previous claims, wherein the one or more pellets have been obtained by agglomeration.

5. Method according to any of the previous claims, wherein the pellet is a compressed pellet.

6. Method according to any of the previous claims, wherein the salt is sodium chloride, potassium chloride, natural sea salt, magnesium chloride, ammonium chloride or calcium chloride.

7. Flour pellet comprising 40-75 wt% flour, 25-60 wt.% of an active ingredient, 0-5 wt.% yeast extract and 0-10 wt.% ingredients other than flour, active ingredient and yeast extract, based on the dry weight of the pellet, wherein the active ingredient is a flavour compound, which flavour compound is a salt.

8. Flour pellet according to claim 7, further comprising 1-5% wt.% yeast extract.

9. Flour pellet according to any of claims 7 or 8, wherein the active ingredient is sodium chloride.

10. Flour pellet according to any of claims 7 to 9, wherein the salt is potassium chloride, natural sea salt, magnesium chloride, ammonium chloride or calcium chloride.

## Patentansprüche

1. Verfahren zur Herstellung eines Teigprodukts, umfassend Aussetzen des Teigs einer Wärmebehandlung, wobei der Teig durch Mischen von Wasser, nicht-pelletiertem Mehl und einem oder mehreren Pellets, umfassend 40-99 Gew.-% pelletiertes Mehl, 1-60 Gew.-% aktiven Bestandteil, 0-5 Gew.-% Hefeextrakt und 0-10 Gew.-% andere Bestandteile hergestellt wurde, wobei der aktive Bestandteil eine Geschmacksverbindung ist, wobei die Geschmacksverbindung ein Salz ist.

2. Verfahren nach Anspruch 1, wobei die Wärmebehandlung Backen umfasst.

3. Verfahren nach einem der vorhergehenden Ansprüche, wobei das eine oder die mehreren Pellets in einem Verfahren pelletiert wurden, umfassend die Schritte von:
- Pelletieren eines Gemischs aus Mehl und dem aktiven Bestandteil bei einer Temperatur unter 60°C; und
- optional einen oder mehrere Trocknungs- und/oder Kühlungsschritte.

4. Verfahren nach einem der vorhergehenden Ansprüche, wobei das eine oder die mehreren Pellets durch Agglomeration gewonnen wurden.

5. Verfahren nach einem der vorhergehenden Ansprüche, wobei das Pellet ein komprimiertes Pellet ist.

6. Verfahren nach einem der vorhergehenden Ansprüche, wobei das Salz Natriumchlorid, Kaliumchlorid, natürliches Meersalz, Magnesiumchlorid, Ammoniumchlorid oder Kalziumchlorid ist.

7. Mehlpellet, umfassend 40-75 Gew.-% Mehl, 25-60 Gew.-% eines aktiven Bestandteils, 0-5 Gew.-% Hefeextrakt und 0-10 Gew.-% andere Bestandteile als Mehl, aktiver Bestandteil und Hefeextrakt, basierend auf dem Trockengewicht des Pellets, wobei der aktive Bestandteil eine Geschmacksverbindung ist, wobei die Geschmacksverbindung ein Salz ist.

8. Mehlpellet nach Anspruch 7, ferner umfassend 1-5 Gew.-% Hefeextrakt.

9. Mehlpellet nach einem der Ansprüche 7 oder 8, wobei der aktive Bestandteil Natriumchlorid ist.

10. Mehlpellet nach einem der Ansprüche 7 bis 9, wobei das Salz Kaliumchlorid, natürliches Meersalz, Magnesiumchlorid, Ammoniumchlorid oder Kalziumchlorid ist.

## Revendications

1. Procédé de préparation d'un produit de pâte, comprenant la soumission d'une pâte à un traitement thermique, dans lequel la pâte a été préparée en mélangeant de l'eau, une farine non granulée et un ou plusieurs granules comprenant 40 à 99 % en poids de farine granulée, 1 à 60 % en poids d'ingrédient actif, 0 à 5 % en poids d'extrait de levure et 0 à 10 % en poids d'autres ingrédients, dans lequel l'ingrédient actif est un composé aromatisant, ledit composé aromatisant étant un sel.

2. Procédé selon la revendication 1, dans lequel le traitement thermique comprend la cuisson.

3. Procédé selon l'une quelconque des revendications précédentes, dans lequel les un ou plusieurs granulés ont été granulés dans un procédé comprenant les étapes de :
- granulation d'un mélange de farine et d'ingrédient actif à une température inférieure à 60 °C ; et
- éventuellement une ou plusieurs étapes de séchage et/ou de refroidissement.

4. Procédé selon l'une quelconque des revendications précédentes, dans lequel les un ou plusieurs granulés ont été obtenus par agglomération.

5. Procédé selon l'une quelconque des revendications précédentes, dans lequel le granulé est un granulé compressé.

6. Procédé selon l'une quelconque des revendications précédentes, dans lequel le sel est le chlorure de sodium, le chlorure de potassium, le sel marin naturel, le chlorure de magnésium, le chlorure d'ammonium ou le chlorure de calcium.

7. Granulé de farine comprenant 40 à 75 % en poids de farine, 25 à 60 % en poids d'un ingrédient actif, 0 à 5 % en poids d'extrait de levure et 0 à 10 % en poids d'ingrédients autres que la farine, l'ingrédient actif et l'extrait de levure, sur la base du poids sec du granulé, dans lequel l'ingrédient actif est un composé aromatisant, ledit composé aromatisant étant un sel.

8. Granulé de farine selon la revendication 7, comprenant en outre 1 à 5 % en poids d'extrait de levure.

9. Granulé de farine selon l'une quelconque des revendications 7 ou 8, dans lequel l'ingrédient actif est le chlorure de sodium.

10. Granulé de farine selon l'une quelconque des revendications 7 à 9, dans lequel le sel est le chlorure de potassium, le sel marin naturel, le chlorure de magnésium, le chlorure d'ammonium ou le chlorure de calcium.
